# EUROPEAN PATENT SPECIFICATION

(11) **EP 3 443 451 B1**
(45) Date of publication and mention of the grant of the patent: **20.09.2023**
(21) Application number: 17783379.5
(22) Date of filing: 07.06.2017
(51) Int. Cl.: G06F 21/57, G06F 7/00, B64C 39/02, G05D 1/00, H04L 67/125, G06F 21/64, G06F 21/44, H04L 9/40, H04W 12/10

(54) **SYSTEM FOR VERIFICATION OF INTEGRITY OF UNMANNED AERIAL VEHICLES**
SYSTEM ZUR ÜBERPRÜFUNG DER INTEGRITÄT VON UNBEMANNTEN LUFTFAHRZEUGEN
SYSTÈME DE VÉRIFICATION DE L'INTÉGRITÉ DE VÉHICULES AÉRIENS SANS PILOTE

(43) Date of publication of application: 20.02.2019
(73) Proprietor: Rhombus Systems Group, Inc., Philadelphia, PA 19103 (US)
(72) Inventor: OLSON, Erlend, Newport Beach, CA 92658 (US)
(74) Representative: Zucker, Volker
(86) International application number: PCT/US2017/036427
(87) International publication number: WO 2017/181204

(56) References cited:
- US-A1- 2013 036 103
- US-A1- 2013 036 103
- US-A1- 2014 379 173
- US-A1- 2014 379 173
- US-A1- 2016 098 259
- US-A1- 2016 244 187
- US-B2- 8 327 153
- US-B2- 8 838 289

## Description

### BACKGROUND OF THE INVENTION

### 1. Field of the Invention

The invention relates to unmanned aerial vehicles (UAVs), and more particularly to a system for verifying the integrity of a UAV and regulating UAV flight operation.

### 2. Brief Description of the Related Art

Unmanned aerial vehicles (UAVs) are expected to proliferate into society in the coming years, performing functions such as delivering packages, remote-sensing inspections and assisting with other activities in daily commercial, industrial and consumer life. Unlike manned aircraft, UAVs are expected to operate much closer to humans, animals, property, buildings and equipment. In addition, UAVs are anticipated to perform their functions in automated fashion and increasingly beyond line of sight of an operator or trusted responsible person.

Because UAVs are operating in airspace alongside other manned aircraft, often with passengers, and in and around other objects and humans, they can pose a threat to life and property if they are operated with uncertified or incompatible or untested software or hardware, and they can pose a further threat if the UAV is hacked or taken over by an unauthorized person with nefarious purposes. Manned aircraft can pose a similar threat, however manned aircraft and manned aircraft flights are under the control of a trusted person - the pilot. The trusted person performs the functions of insuring flight safety and that the aircraft is under his control and flown in a safe manner.

Typically, flight plans are required for aircraft that use national airspace. The management of air traffic is important for safety of those traveling and/or piloting crafts, as well as individuals, property and animals at locations on the ground over which the crafts fly. Since the early days of flight, the United States has provided a system that both collects and distributes flight information from and to pilots. A pilot typically is required to submit or file a flight plan providing the intended direction of the locations to be traveled. The flight plan usually is required to include aircraft identification, special equipment, departure and arrival points and the route of the flight. A service, often referred to as Flight Service, is offered to pilots and is provided by a commercial entity or government (or a commercial entity that may contract with a government). The Flight Service is designed to provide information to pilots when the flight plan is filed, as well as updated notifications of activities or events that may potentially affect the intended flight plan. Aircraft flights are managed to allow several aircraft to be closely located within the same general airspace, while sufficiently separated so as not to interfere with or pose a safety risk to each other.

With the increasing use of UAVs, both for commercial and recreational purposes, the airspace, once reserved solely for traditional airplanes, is now shared with a variety of UAVs. In addition to the activities and alerts that pilots already are required to be aware of, another variable, namely, the potential presence of UAVs must also be accounted for. The Flight Service that warns pilots of adverse conditions, such as, for example, a closed runway or threatening weather, may also gather and provide information about nearby aircrafts, as well as nearby UAVs. There have been increasing demands for UAV operators not only to register their crafts, but also, in a number of instances, to provide information about their intended UAV operation, such as, a flight plan. The goal is designed to reduce interference and allow UAVs to cooperate in the same airspace as other aircraft. The desire is to reduce or eliminate the potential for mid-air collisions between an UAV and other aircraft. For example, the system that aircraft pilots use to obtain information and alerts of their impending flight, which typically is known as The Flight Service, has been updated to include a category of alerts that pertain to UAVs (sometimes referred to as an unmanned aerial systems, or UASs). Aircraft pilots, therefore, may be provided with information that identifies the potential presence of a UAV in the vicinity of an aircraft based on the aircraft flight plan, and information provided by the UAV operator. For example, an operator of a UAV or drone, may register and provide details, such as, the operator name and contact information, UAV identification, day and time of flight, maximum altitude, and flight boundary location, *e.g.*, a radius based on geolocation coordinates.

The importance of integrating UAV operation with traditional air space usage and aircraft is designed to provide the benefits of the UAV usage, as well as to promote safety by reducing the risks of adverse events, such as collisions.

However, as with any device, even abundances of precautionary measures may not eliminate all potential hazards. Given the precautions taken and the potential for risk, there is also the potential to cause damage to persons and property, including passengers of neighboring aircraft, as well as persons, animals, and structures on the ground. The potential exists for tampering with the UAV, including, for example, attempts to take over the UAV operation and divert it, or to operate it in a manner unintended by its original operator.

Since unmanned and beyond-line-of-sight UAVs may be operated in a fully autonomous mode with no direct human interaction, a system is needed to assure that the UAV's flight system, software and hardware have not been tampered with, so that the UVA can be trusted to operate in airspace.
US 8,327,153 B2 teaches a method and a system for verifying a software platform of a vehicle including at least one electronic control unit, comprising a trusted platform module that extends a hash value of normally operated software in the electronic control unit to generate a reference confirmation value and an integrity verification module that receives a final confirmation value corresponding to a hash value of software measured in the electronic control unit from an integrated security apparatus inside the vehicle and verifies the software platform of the vehicle based on results obtained by comparing the final confirmation value with the reference confirmation value.
The integrated security apparatus includes an integrity verification processing module that collects the hash value of software measured in the electronic control apparatus and requests the extension of the collected has value, and a trusted platform module that extends the hash value based on an initial value and a data processing sequence that are input by the driver of the vehicle to generate the final confirmation value.
The technical problem is to provide a system which resides in an unmanned aerial vehicle, a method for securing the operation of an unmanned aerial vehicle and an improved unmanned aerial vehicle.
The technical problem is solved by a system of the features of claim 1, a method with the features of claim 10 and an unmanned aerial vehicle with the features of claim 30.

### SUMMARY OF THE INVENTION

A system is provided for managing UAVs, and more particularly for regulating the operation of one or more UAVs by providing verification of the integrity of the UAV. According to preferred embodiments, the system provides verification of a UAV through a verification mechanism. According to preferred embodiments, the verification mechanism may be provided in conjunction with one or more UVA components (e.g., hardware), software, or combinations. A method for verifying a UAV and UAVs configured with a verification system, also are provided.

According to preferred embodiments, the system implements a security feature to ensure that the control of the UAV is as intended. A certification mechanism is implemented to provide a verification state for a UAV. The UAV verification state preferably is based on one or more modalities of the UAV hardware, software, or combinations of hardware and software. According to a preferred embodiment, a verification state may be implemented through a cryptographic system in which its cryptographic keys and/or cryptographic algorithms are employed to provide a state for the UAV. The UAV state preferably is assigned based on one or more unique properties that identify that particular UAV. Preferred embodiments may provide a cryptographic hash value for an essential hardware component (such as, for example, a drive or control motor serial number and/or model and/or install date), or essential software (such as, for example navigation software), or both (a combination hash of a hardware component identification and software). The hardware component may be identified by its unique identification indicia, which, for example, may be the hardware serial number, model number, installation date, or some other identifier (or may preferably be identified by combinations of these), whereas the software may be identified by a unique property (a hash value, checksum hash, or the like).

According to preferred embodiments, the UAV may be authenticated and assigned a certification state. The UAV therefore may receive a certification, whereby the authentication state or authentication hash value us generated, and preferably stored for that specific UAV.

According to some preferred embodiments, the certification of the UAV may be done even without those that own or operate the UAV having knowledge of the verification policies, for example, where the policies are not revealed other than potentially to the verifying hardware (such as a computer that is assigned to identify the UAV and certify it) or the organization having knowledge of what properties or characteristics are being verified. For example, the UAV may be provided with a certification instruction or chip that provides the verification. The verification may therefore be transmitted or obtained for storage from the UAV, and stored for reference and further use by a certifying authority.

According to some embodiments, the verification takes place using one or more electronic components, or software, of the UAV, or combinations thereof, which are designed to provide the UAV state, and identify deviations thereof. For example, where specific hardware or software is utilized in conjunction with the verification hash derivation, the identity of deviations of those specific pieces of hardware or software, or both, may be obtained upon conducting the verification.

The certification may be carried out by a certification authority. The certification authority may establish its own set of parameters for implementing certification of the UAV. According to some preferred embodiments, the certification authority may be provided with the ability to control UAV permissions and authorizations by certifying UAVs and verifying a UAV prior to the UAV undertaking some activity or operation. The certification authority may engage in secure communications with UAVs, which may be encrypted transmissions, or transmissions of encrypted verification data, or other cryptographic transmissions. According to some embodiments, the system may include one or more certification management operations features that may be implemented with hardware, such as a computer, and communications hardware, to conduct certifications of UAVs, and implement verification of UAVs prior to or even during flight.

The system may be configured to reside in a UAV and interface with both the communications system of the UAV and the UAV's software and hardware resources. The UAV may be configured to execute firmware that obtains a serial number or unique identifier of hardware and software on the UAV, creates a hash code combination of such unique identifiers, encrypts the hash code, transmits the encrypted hash code over a wired or wireless communications system to another computer which maintains a table of the certified codes of each UAV which results in the computer authenticating the specific UAV (or not). The system also may determine whether a specific UAV's hardware or software has been changed since the UAV was last certified.

The features described herein in connection with one embodiment may be used in other embodiments, and features may be combined together so that embodiments may be provided with one, two or combinations of several features.

### BRIEF DESCRIPTION OF THE DRAWING FIGURES

FIG. 1 is a flow diagram depicting an exemplary implementation of the system and showing process steps according to an implementation of a method for authenticating a UAV.
FIG. 2 is a flow diagram depicting another implementation of the system illustrating a UAV requesting to be verified.
FIG. 3 is a perspective view of an exemplary embodiment of an unmanned aerial vehicle (UAV) implementing the system of the invention.
FIG. 4 is a front elevation view of another exemplary embodiment of an unmanned aerial vehicle (UAV) implementing the system of the invention.

### DETAILED DESCRIPTION OF THE INVENTION

The system may be implemented by providing the UAV with a chip or software that includes instructions to generate the verification hash and provide the hash code.

For example, according to some embodiments, the present invention may provide a cryptographic system as part of the UAV device circuitry, which may comprise a storage component, microcircuit, microcontroller or processor, along with instructions for generating and/or storing a key. For example, according to one embodiment, an integrated circuit component is provided including a storage element for internally storing a public key of the certifying organization for use in encrypting a unique verification state code generated from the UAV (*e.g*., components, software or combinations thereof), and/or decrypting a digital signature from the certifying entity. This public key and/or private key may be implemented as a further way to provide security by encrypting the unique hash code (such as, for example, a verification code requested of the UAV by the certifying organization computer). The public or private key implementation embodiments may further include a time element or location element to further encrypt the hash code.

According to embodiments, the system provides verification of the UAV to verify that the UAV hardware and/or software has not been changed. Where the system identifies a change to hardware or software, according to some preferred embodiments, the system may be configured to identify the component or components (hardware item or software) that have been changed. In addition, the certifying organization may implement protocols for recertification, such as, for example, where a motor has been replaced, or where an upgrade, *e.g.,* to a navigational component or navigation software, has been made. The recertification may be done so that any changes made are approved, authorized, and/or meet any regulatory requirements, and are acknowledged by the authentication or certification hash value.

According to some preferred embodiments, the system may be implemented to secure the operation of an unmanned aerial vehicle (UAV). The UAV preferably includes a plurality of hardware components and software. An authentication hash code corresponding to the UAV is generated. This is done preferably by obtaining a unique identifier from at least one of the UAV hardware components or the UAV software, and, according to preferred embodiments, from both unique identifier, such as, a serial number or checksum, of the respective hardware and software. An authentication hash code is created for the hardware or software, or combination of the hardware and software identifiers. The system preferably is employed in conjunction with a remote computing component that is remotely situated from the UAV and is configured to exchange communications with the UAV over a network. The UAV preferably includes a computing component, which may be provided separately or as part of the UAV circuitry. An authentication hash code of the UAV preferably is stored (*e.g.,* upon the UAV being certified) and is available to the remote computing component, via an accessible database, table or other access means. In order to verify the UAV the remote computing component receives an encrypted verification code from the UAV, and then decrypts the verification code and compares it with the authentication code for that UAV. If there is a match, then the UAV is authenticated, but if there is no match, then the UAV is not authenticated.

According to some embodiments, the UAV may make a request to a certifying organization by contacting a certifying computer through a network. According to some embodiments, the certifying organization or computer (e.g., a remote computing component) may make a request of a UAV for the UAV to provide verification information. The UAV may receive the request and may generate the verification code, such as a hash value. According to some embodiments, the UAV is configured with instructions that provide the protocol for generating the verification hash value from the UAV components. The instructions and protocol, according to some embodiments, may be implemented via a TPM chip or system, or fTPM. According to embodiments of the system, the UAV may be configured with a protocol that is a zero-knowledge proof protocol, where verification of the UAV authentication parameters may remain unknown to the UAV (even though the UAV carries the hardware and software component information from which the verification hash is generated). For example, according to some embodiments, the UAV also may be configured to generate a verification hash without specifically being provided with the knowledge. According to some other embodiments, the exchanges of communications between the UAV and the certifying authority computer may be secured with keys, as well as through implementation of a zero-knowledge proof protocol.

Once the verification code is generated based on the existing UAV hardware and software information, the verification code is then communicated to the certification computer, which, according to some embodiments, is remote from the UAV. The verification code preferably is encrypted when transmitted, and is decrypted by the certification computer. According to some embodiments, the UAV may connect to the certification computer through a wired connection, and according to other embodiments may be connected through a wireless connection.

The verification of the UAV, for example, may provide an indication of whether any software changes have taken place (including whether any unauthorized software changes occurred), whether any hardware changes have been made, or both.

According to preferred embodiments, a database is provided having a stored plurality of authentication hash codes that correspond with a respective plurality of UAVs, whereby each specific UAV may be authenticated by its respective authentication hash code. For example a remotely situated computing component may maintain or access a table of the certified codes of a plurality of UAVs. The certified codes (e.g., authentication hash codes) may be stored in encrypted form.

The present invention may also provide a cryptographic device as an integrated circuit component resident on the UAV, which may include a storing element for internally storing a public key of the regulatory entity (such as the certifying organization) for use in decrypting a digital signature from the regulatory entity, thus verifying that any directive received by the UAV (*e.g.,* to generate and/or provide a verification code) is authorized by the regulatory entity.

The present invention may further provide the cryptographic device as an integrated circuit component with the capability of internally generating a unique public/private key pair for potential use in performing encryption/decryption operations, securely containing and using the public/private key pair within the cryptographic device to substantially prevent detection of the key pair through reverse engineering, as well as providing a modifiable cryptographic device as a unique integrated circuit component which can remotely perform guaranteed authorized modifications.

According to an exemplary embodiment, in accordance with a preferred implementation of the system, each UAV that is to be authorized to fly in certain airspaces, based on regulations or other legal restrictions, first obtains a certification. The certification preferably is carried out by a certification or regulatory authority. The certification preferably comprises a certification of the UAV hardware and/or software, and, according to preferred embodiments, preferably comprises a certification of the UAV's major flight and navigation systems (which preferably may include hardware components and software). According to preferred implementations, the certification is carried out by a testing or certification authority that may provide subsequent verification of the UAV.

Preferably, the UAV may be inspected or otherwise determined to have acceptable hardware, software, and preferably both. For example, within the certified UAV, specific software and hardware that has been authorized as air worthy for that specific UAV is then connected to either a hardware or software or combination hardware/software system which computes a hash code representing the state of the hardware and software on some predetermined part of the UAV's command and control and navigation systems. According to some preferred embodiments, the hash code may be created from a combination of the electronically read-able serial number and model number and date of installation of hardware (such as, for example, a computer or a drive motor) and the checksum or hash code of each piece of important software in the UAV's computing systems. The number of hardware and software elements may be determined by regulations or best practices, without limitation. A hash is created at the time of certification, which is the certification or authentication hash. The certification or authentication hash preferably is then stored in a secure location associated with a computer that verifies the hash codes for UAVs at the time when they wish to use national air space for flight operations (or other regulated operation).

Examples of authentication hash codes that may be implemented for certification of the UAV are depicted in exemplary tables set forth below. The tables illustrate hardware component identification and an authentication hash value associated with each of the respective exemplary hardware components listed (although there may be additional hardware components of the UAV other than those listed here, and which also may be used for determining the authentication value). A table provided for software of the UAV is shown and lists some examples of essential operations software. An example of a combination of hardware and software is depicted in a table illustrating a hash value for the combination of the hardware and software. In the depiction, the hash values are generated from the hardware indicia (e.g., serial number, model number and installation date) and software indicia combined. In addition, according to some other embodiments, the values may be combined together (hardware value string | software value string) and a hash value computed. According to other embodiments, the values may be certified for each hardware component and for each software so that in the event that the verification of the UAV fails, the individual component hardware or software may be identified as causing the failure fault. Tables providing exemplary illustration of the certification or authentication values are as follows:

**Hardware Table**

| **Hardware** | **Serial No.** | **Model No.** | **Installation Date** | **Authentication Hash Value** |
|---|---|---|---|---|
| Rotor Drive Motor 1 | 17507676376 | 235489 | 04042014 | 4673681254 |
| Rotor Drive Motor 2 | 16408706385 | 571863 | 05072014 | 3435799895 |
| Rotor Drive Motor 3 | 12156871587 | 978153 | 06082014 | 2565871215 |
| Rotor Drive Motor 4 | 18542685854 | 468512 | 07112014 | 5452875728 |
| Rotor Orienting Motor 1 | 29485672546 | 325418 | 08142014 | 8613481576 |
| Rotor Orienting Motor 2 | 26715672482 | 976247 | 09172014 | 7512345637 |
| Rotor Orienting Motor 3 | 23587459854 | 489415 | 10242014 | 9235934782 |
| Rotor Orienting Motor 4 | 24545875846 | 365272 | 11272014 | 6546173591 |

**Software Table**

| **Software** | **Check Sum/ Hash** |
|---|---|
| Navigation Software | 1652773410 |
| Motor Drive Software | 1784428372 |
| Communication Software | 1374215734 |

### Combination Hardware/Software

| **Hardware/Software** | **Serial No.** | **Model No.** | **Installation Date** | **Check Sum/Hash** | **Authentication Hash Value** |
|---|---|---|---|---|---|
| Rotor Motor 1 + Navigation Software | 17507676376 | 235489 | 04042014 | 1652773410 | 8654025907 |
| Rotor Motor 2 + Motor Drive Software | 16408706385 | 571863 | 05072014 | 1784428372 | 8987456516 |

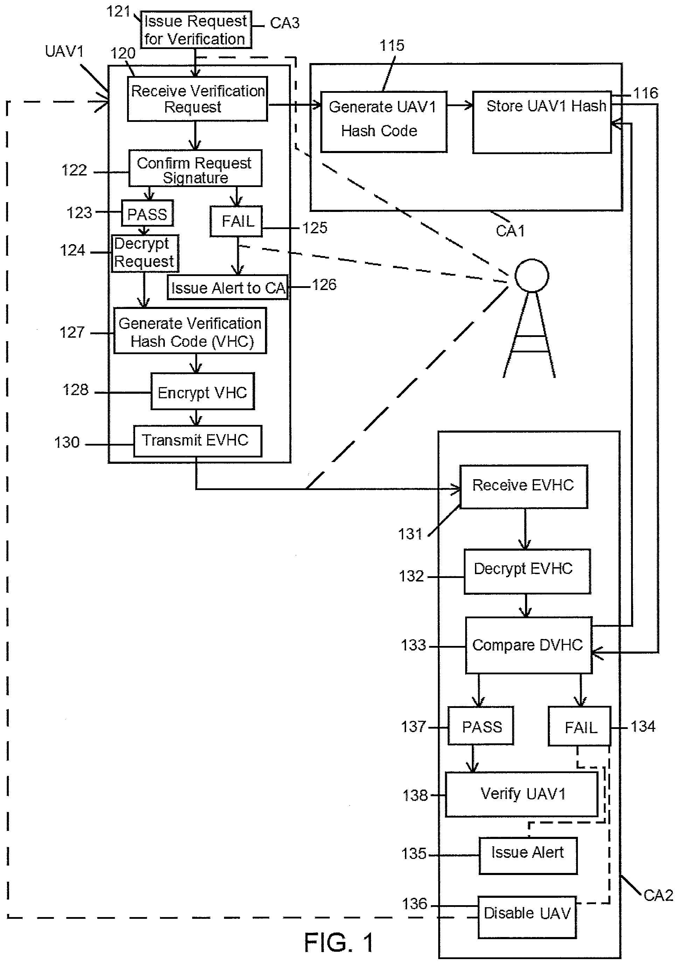

Referring to FIG. 1, a diagram depicting an exemplary embodiment of the implementation of the system in connection with an unmanned aerial vehicle, which in this illustration is UAV 1. The vehicle, UAV1, preferably undergoes a certification procedure, which in the illustration is carried out by a certification authority computer, CA1. A certification hash code (or authentication hash code) is generated, block 115, and stored, block 116 for subsequent reference, when the UAV1 is being verified by the certification authority, such as the command control computer (CA, *e.g*., CA1,CA2,CA3). The vehicle UAV1 receives a request, block 120, from a requesting component, block 121, which may be a computer configured as a command control authority that certifies the UAVs. In the illustration of FIG. 1, the reference to CA1, CA2, CA3, may be a single computer of a certification authority, or may be one or more separate computers. Alternatively, the request received by UAV1, block 120, may be generated from a rogue component, such as a nefarious computer, hacker computer, or other malicious transmission. The request, block 121, preferably is transmitted with a certificate or signature, and is cryptographically provided. The UAV1 receives the request, block 120, and determines whether the request meets the requirements for the authorized signature, certificate or other security feature, block 122. If the request is deemed to be from the trusted certifying authority (CA1), then the UAV1 passes the request, block 123, and implements processing of the request by decrypting the request, block 124. Where the request cannot be deemed to be trusted, and hence, fails, block 125, no further processing of the request may be undertaken, or, alternatively, or in addition, an alert may be generated and communicated, such as, for example, to a certification computing component, block 126. Where the request has passed, block 123, UAV1 decrypts the request, block 124, and generates a verification hash code (VHC), block 127. The VHC is then encrypted, block 128, and the encrypted verification hash code (EVHC) is transmitted, block 130, to the certification computer, shown as CA2 in FIG. 1.

The certification computer CA2 receives the EVHC, block 131, from the UAV1, decrypts the EVHC, block 132, and compares the decrypted verification hash code (DVHC), block 133 with the stored UAV1 hash code, block 116. Where the comparison fails, block 134, then an alert may be issued, block 135, to a component, or a human, through a device, such as, a computer, tablet, or other notification device. Alternatively, the failure to verify the UAV1 may prevent the authorization for the UAV1 to proceed further or carry out particular operations. The UAV1 may be unauthorized to enter the protected airspace or zone. According to some embodiments, the certification computer, CA2, in this example, may issue a command to disable the UAV1 or one or more functions of the UAV1, block 136.

Where the comparison of the DVHC, block 133, matches the stored UAV1 hash value, block 116, the verification of the UAV1 passes, block 137, and the UAV1 is verified, block 138. According to some alternate embodiments, the UAV1 makes a request of a remote computer, such as, the certification authority computer (e.g., CA1,CA2,CA3) to verify UAV1. This may be done when the UAV1 desires to undertake some action, such as, for example, enter a designated or controlled airspace, operate a camera, or deliver a payload.

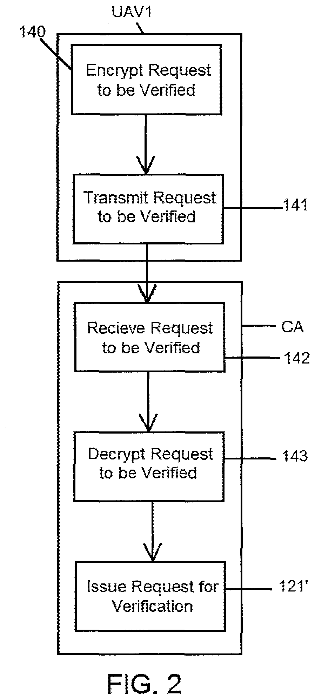

The UAV may initiate a request to a certification authority be verified. This request may be issued from the UAV to a certification authority computer. The certification authority computer may receive and process the request and undertake verification of the UAV. For example, the UAV may make a request for verification in order to enter a controlled airspace, undertake a particular flight plan or path, carry out an operation, such as, imaging, deployment of a payload, or other function. In accordance with this implementation, FIG. 2 depicts an example of a diagram illustrating a UAV, UAV1, making a request of the certification authority CA. The depiction in FIG. 2 may take place in addition to, or as an alternative to the certification computer CA1 of FIG. 1 issuing a request for verification (see block 121 of FIG. 1). As illustrated in FIG. 2, UAV1 makes a request, preferably, by encrypting the request, block 140, and then transmitting the request, block 141, to a certification authority computer (e.g., such as the computer or computers, CA1,CA2,CA3 and CA depicted in FIGS. 1 and 2). The certification authority computer, CA depicted in FIG. 2 (which may be any one or more of the certification authority computers represented by CA1,CA2,CA3 of FIG. 1) receives the request to be verified from UAV1, block 142. The request (see, *e.g.,* blocks 141 and 142) may be transmitted and received over a network (wired or wireless). The certification authority computer decrypts the request, block 143. Once the request is decrypted and deemed a trusted request from a UAV1, the verification of the UAV1, as requested, takes place. The verification may be carried out as illustrated herein, including, as depicted in the representative example of FIG. 1. The certification authority computer issues a request for the UAV1 to generate the verification hash value. This is represented by block 121' of FIG. 2, which essentially may proceed as depicted in FIG. 1, block 121.

According to embodiments of the invention, a UAV traffic management (UTM) system is provided to facilitate the management of the UAVs that may operate within a particular airspace. The UTM system preferably may regulate the airspace by verifying each UAV that is within the airspace or desires to enter the space.

At subsequent times, the UAV may generate and transmit a request so that it may be verified. Alternatively, the request may be generated autonomously in connection with the UAV undertaking of a particular activity, direction, flight plan or procedure. For example, where the UAV flight plan involves passage through a zone of airspace which is under regulation, the UAV may obtain verification. Once having been certified, the certified UAV may proceed to operate in conjunction with the certification system and management features. For example, the system may be configured so that when the UAV makes a request to the UAV traffic management (UTM) system, such as to file a flight plan, or be permitted to fly within controlled airspace, the UTM system uses any number of available encryption communications methods to query the UAV for its specific hash code, which is generated at the time of inquiry via co-encryption with a key or time code supplied by the UTM system, which requires that the UAV system actually create a new hash code rather than simply regurgitating a separately stored hash code which may not be reflective of the actual hardware and software on the UAV at the time of the request.

The verification hash code is then transmitted to the UTM computer verification system, which then decrypts the message received from the UAV in response to the query and determines whether it matches the same hash code stored after certification *(i.e.,* the certification or authentication hash). If it matches, the UAV is presumed to be verified as authenticated, and if not, it is presumed not verified as authenticated, and then appropriate actions can be taken from there, depending on the nature of the UTM system, the nature of the UAV, regulations and other factors. The UAV, upon failing to pass verification, may be disabled, may be issued an instruction to land at a particular location, may revert to manual control (or where the UTM system may itself, or in conjunction with another system, control the UAV flight operations). In addition, when the UAV fails verification, the system also may issue an alert to an appropriate individual, system or other component

The hash code on the UAV may be generated with hardware or software or combinations thereof on the UAV. The hash code on the UAV can be created by either hardware, such as a dedicated TPM chip, software such as that similar to or comprising ff PM, or some combination thereof.

According to preferred embodiments, the hash code may be generated based on one or more policies that correspond with the state of the UAV hardware, UAV software, both, or combinations thereof. The system may be configured to implement verification based on the specific component or components of the UAV, or the UAV software, such as, for example, a hash value, checksum, or both.

According to some preferred embodiments, the UAV may be configured with a dedicated Trusted Platform Module (TPM) chip or software such as that similar to or comprising ITPM, or one or more combinations of these features. For example, a conventional TPM, such as a hardware device or "chip" may be provided, and, according to some embodiments, may include its own secure crypto-processor. A TPM chip or software may be provided as part of or in conjunction with the circuitry of the UAV. The TPM chip or software may securely generate cryptographic keys, as well as limitations on their use. The TPM chip also may include a feature of a hardware pseudo-random number generator. The system preferably is configured to generate a hash value based on particular hardware and/or software configurations of the UAV, and thereby provide remote attestation of the UAV in connection with the certification. For example, in the event that unauthorized changes are made to the UAV software, *e.g*., to take over operations or to remove certain functionalities, the hash value, such as the TPM provided hash value, may identify and detect the change to the UAV. Preferred implementations may provide a certification organization (such as the regulatory authority) with the ability to identify unauthorized changes (e.g., to software or UAV hardware components), including where potential tampering with the UAV software has occurred (*e.g.*, where an undesirable or even unlawful purpose is to be carried out). According to preferred embodiments, the hash value preferably is obtained by generating a certificate that identifies the software that is currently running, the hardware profile of one or more hardware components of the UAV, or combinations of these. For example, the serial number of a hardware component, such as a drive motor, its model number and date of install, as well as an identification or serial number of a navigation chip may be used to generate a certification or authentication hash for the UAV. The certification system may be used by having the certification organization identify the hash value and compare the value to the expected known acceptable or trusted value. According to some embodiments, the certification organization may generate the certification hash (or authentication hash) that is associated with the UAV and store it for reference for future verification. The trusted value, for example, may be a hash value that indicates proper installation, operation, and/or other property of the UAV software and hardware. The UAV preferably is configured with instructions, which, for example, may be provided in a TPM component (such as a chip) or fTPM component or chip, which utilize the parameters of the existing hardware and software components, preferably, at the time of a request for authentication, to produce a hash value which is transmitted to the certifying authority in order to verify the UAV.

According to preferred embodiments, the system preferably is configured to function with a variety of UAVs, and, according to preferred embodiments, specially configured UAVs may be provided for use in connection with the certification system. For example, preferably, a UAV is configured so that the certifying organization may remotely communicate with the UAV, and exchange communications which preferably includes a certificate or hash verification. The communications preferably are secure communications, and preferably are encrypted. A remotely situated computing component preferably is configured to communicate with the UAV. According to a preferred implementation of the system, the computing component is configured with software containing instructions for ascertaining an authentication state of the UAV and verifying the UAV. According to some implementations, the computing component may receive requests from the UAV for certification. According to some implementations, the computing component also may issue requests to a UAV and undertake to certify the UAV, even where the UAV has not so requested. The verification preferably may be provided as an operational requirement. For example, according to some implementations, the UAV may be required to pass verification in order to carry out one or more functions, such as, for example, being able to fly, or to be admitted into the controlled airspace, or being able to carry out one or more operational functions (*e.g.*, deliver a payload, operate a camera, transmit video, and the like).

The present system preferably may be configured to further safeguard the communications between the UAV and remote component, such as the certification organization by implementing encryption of the information exchanged between the UAV and a remote computing component. For example, the remote attestation preferably may be combined with public-key encryption in order to prevent potential utilization of the information in the event that the communication is intercepted (*e.g*., such as by an eavesdropper).

According to some alternate embodiments, the system may implement a direct anonymous attestation (DAA) security. A DAA signing system may be implemented in connection with the TPM chip or system to provide for secure exchanges between the UAV and the certifying authority.

According to some preferred embodiments, the certification organization may control the TPM chip or fTPM software. For example, the TPM chip's unique and secret RSA key may provide another level of authentication, by verifying that the regulatory computer seeking to query the UAV (*e.g.*, for a computed hash value) is the genuine certification organization expected to be requesting the information.

According to some embodiments, the UAV circuitry may be configured with a discrete hardware TPM chip integrated into the circuitry or a system board of the UAV hardware components, such as, for example, the UAV computing components or system. For example, in accordance with some embodiments, the UAV may be configured with a suitable interconnection or other suitable hardware component that is capable of supporting the TPM.

The present system preferably provides safeguards to minimize or eliminate potential intrusions to the hardware and software operating systems of a UAV. The system is designed to provide suitable integrity protections and provide defenses against potential malicious modifications to the UAV hardware and software.

According to some preferred embodiments, a "Firmware-Based TPM" or "fTPM," may be implemented in conjunction with the system to provide certification and verifications of the UAV. The "firmware TPM" or fTPM preferably may be implemented to provide a software interface to the security extension functionality integral to processors as an alternative to requiring a hardware TPM module. The fTPM may be utilized to provide trusting computing in conjunction with the certification system. For example, the fTPM may be implemented in the UAV, such as, for example, in the UAV circuitry, to provide a trusted execution environment. According to some preferred implementations, a UAV may be modified using fTPM software and provided with instructions to generate a certification or authentication hash in conjunction with the certification system.

According to some embodiments, a separately provided processor may be used by the UAV to run the certification operations, or alternatively, placing the software in protective memory of the UAV (such as storage that is not readable or modifiable by untrusted components).

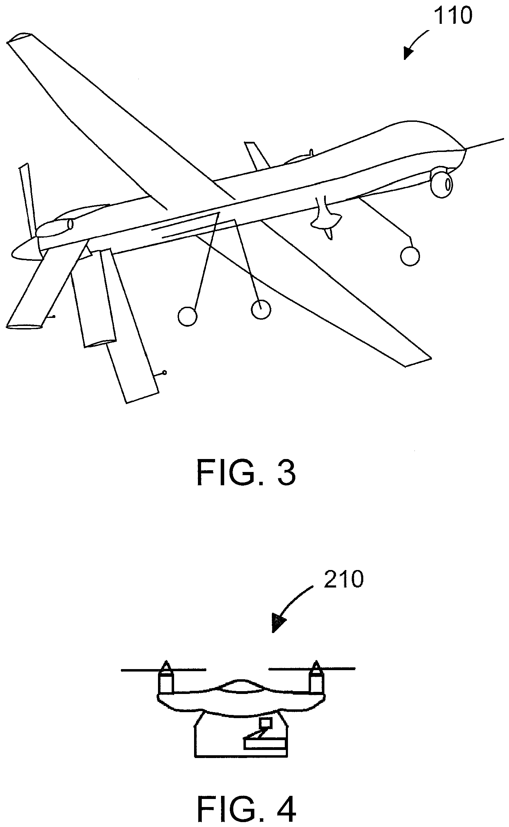

Referring to FIGS. 3 and 4, examples of UAVs 110,210 that may be operated in accordance with the system are depicted. The UAV 110 is configured as a drone, and the UAV 210 is configured as a quadcopter. The UAVs 110,210 preferably are configured with a power supply and communications hardware. The UAVs 110,210 preferably include a computer which includes one or more processors, which, according to some embodiments, may comprise a microcircuit, microcontroller or microprocessor. The UAV or its computer preferably also includes a storage component (which may be part of the circuitry or a processing component, or separately provided). Preferably, software is provided on the UAV circuitry or computing components that contains instructions for monitoring the inputs, such as control signals, as well as flight properties (*e.g.*, acceleration, direction, pitch, and yaw). The software also may include instructions for controlling the rotor operations, and may include a stabilization algorithm to produce stabilization for the intended flight (for smoothing the operation control and flight properties of the vehicle as instructions are carried out and the vehicle implements instructions from a control, program, or other source). The UAVs also may be configured with navigation components or circuitry, which, for example, may include a GPS and compass, which may be provided alone or together on a chip or circuitry, and in some instances with one or more other components (*e.g.*, an IMU). The UAV may be configured with an electronic speed control that may be embodied in the software, hardware, vehicle circuitry, or combinations thereof. The speed control mechanism preferably may be provided to manage the operation of the motors that drive the rotors as well as changes to the rotor orientation (e.g., by changing the motor shaft direction), and may function by receiving remote signals, or operate in conjunction with programming directing flight path, direction and other vehicle operations. According to some embodiments, the certification organization, such as the remote computer that functions as a command and control computer to verify the UAV, may be provided with a capability to control one or more operations or functions of the UAV. According to some embodiments, the UAVs 110,210 preferably include a TPM chip or system, or may include fTPM firmware for managing the verification operations of the UAV.

Although exemplary embodiments of UAVs are depicted, the system may be employed in conjunction with other unmanned aerial vehicles. One or more of the features discussed in connection with one or more embodiments may be separately provided or combined together in other embodiments with one or more other features of the vehicles and/or system. In addition, the system is illustrated in conjunction with the vehicles 110,210, but alternately, the system may be deployed on an existing UAV, and may be provided as a module that is integrated or may be electronically coupled with the UAV computing and electronic components to provide for certification and subsequent verification of the UAV. Also, computer references depicted as CA1,CA2,CA3 and CA may collectively represent a single computer configured to implement the depicted functions, or alternatively, may represent two or three computers. In addition to the computer or computers depicted (e.g., CA,CA1,CA2,CA3), other numbers of computers, including a network of computers may be provided to carry out the command and control operations. These and other advantages may be provided by the invention. For example, although a TPM chip and fTPM firmware may be used, alternatives that may be implemented or provided by a computing standards organization, such as, for example, Trusted Computing Group, may be implemented to provide secure cryptographic communications or exchanges, such as, for example, integrated security provided in certain chips (e.g., communications chips).

## Claims

1. (amended) A system which resides in a UAV and which interfaces with both the communications system of the UAV and the UAV's software and hardware resources and which can execute firmware which:
a. obtains a serial number or unique identifier of hardware and software on the UAV, and
b. creates a hash code combination of such unique identifiers, and
c. further encrypts the hash code, and
d. transmits the encrypted hash code over a wired or wireless communications system to another computer which maintains a table of the certified codes of each UAV which results in said computer verifying the authenticity of the specific UAV (or not), and
e. where the computer then determines whether a specific UAV's hardware or software has been changed since the UAV was last certified;
f. wherein the system carries out a hardware and software integrity check during the flight of the UAV, and
g. wherein when the integrity check fails verification during the flight of the UAV, the system operates the UAV to land the UAV at a designated location, or to revert to manual control to control the UAV.

2. The system of claim 1, wherein a TPM standards compliant chip/system is provided in the UAV for verification of the integrity of the UAV hardware.

3. The system of claim 1, wherein the UAV includes software or firmware comprising a fTPM system.

4. The system of claim 2, wherein the TPM chip verification is also used to encrypt communications between the UAV and a central command and control system.

5. The system of claim 4, wherein said central command and control system is automated.

6. The system of claim 4, wherein said central command and control system is operated by a human.

7. The system of claim 3, wherein a fTPM (firmware TPM) function resides in an existing computer on the UAV to perform the functions set forth in paragraphs a. through d.

8. The system of claim 1, including a public key system or private key system configured to further encrypt the hash code created in b.

9. The system of claim 8, wherein the public or private key system includes one or both of a time element or location element to further encrypt the hash code.

10. (amended) A method for securing the operation of an unmanned aerial vehicle (UAV) including during the flight of the UAV where said UAV includes a plurality of hardware components and software, comprising:
generating an authentication hash code corresponding to at least one UAV, and storing said authentication hash code;
providing at least one computing component electronically coupled with one or more of said plurality of hardware components or said software of said UAV;
obtaining a unique identifier of at least one: (i) hardware component of said plurality of hardware components, or (ii) said software;
creating from said unique identifier a verification hash code for said at least one hardware component or software;
encrypting said verification hash code;
transmitting said encrypted verification hash code over a communications network to a remotely situated computing component,
decrypting said encrypted verification hash code;
comparing said verification hash code with said stored authentication hash code;
authenticating the UAV when said verification hash code matches said stored authentication hash code;
wherein said securing of the UAV operation includes carrying out a hardware and software integrity check during the flight of the UAV, and, wherein when the integrity check fails verification during the flight of the UAV, operating the UAV to land the UAV at a designated location or to revert to manual control to control the UAV.

11. The method of claim 10, wherein said stored authentication hash code is stored in a database.

12. The method of claim 11, including providing a database having a stored plurality of authentication hash codes, wherein each of said stored plurality of authentication hash codes corresponds with a specific UAV.

13. The method of claim 10, including determining whether said hardware or software of said UAV has been changed.

14. The method of claim 10, wherein certifying said UAV comprises generating said authentication hash code corresponding to said UAV, and storing said authentication hash code.

15. The method of claim 14, wherein said remotely situated computing component maintains a table of the certified codes of a plurality of UAVs, wherein said computing component is configured with software containing instructions to generate said verification hash code, compare said generated verification hash code with the certified codes in said table, and authenticating said UAV when said UAV authentication hash code matches said verification hash code.

16. The method of claim 14, wherein said remotely situated computing component maintains a table of the certified codes of a plurality of UAVs, wherein said computing component is configured with software containing instructions to generate said verification hash code, compare said generated verification hash code with the certified codes in said table, and determining whether one of said UAV hardware components or said UAV software has been changed since the UAV was last certified.

17. The method of claim 10, wherein said unique identifier comprises a serial number.

18. The method of claim 10, wherein obtaining a unique identifier is done for at least one hardware component of said plurality of hardware components, and for said software; and wherein said verification hash code is created from a combination of said at least one hardware unique identifier obtained for said hardware, and said unique identifier obtained for said software.

19. The method of claim 18, wherein said remotely situated computing component maintains a table of the certified codes of a plurality of UAVs, wherein said computing component is configured with software containing instructions to generate said verification hash code, compare said generated verification hash code with the certified codes in said table, and authenticating said UAV when said UAV authentication hash code matches said verification hash code.

20. The method of claim 19, comprising operating said UAV when said UAV has been authenticated by said UAV verification hash code.

21. The method of claim 10, wherein transmitting said encrypted verification hash code is done over a wireless communications network.

22. The method of claim 10, wherein transmitting said encrypted verification hash code is done over a wired communications network.

23. The method of claim 10, wherein said wherein a TPM standards compliant chip/system is provided in the UAV for: generating the authentication hash code, obtaining a unique identifier of at least one: (i) hardware component of said plurality of hardware components, or (ii) said software; and creating from said unique identifier a verification hash code for said at least one hardware component or software.

24. The method of claim 23, wherein the UAV includes software or firmware comprising a fTPM system.

25. The method of claim 23, wherein the TPM standards compliant chip/system encrypts communications between the UAV and the remotely situated computing component.

26. The method of claim 10, wherein said remotely situated computing component comprises a central command and control system.

27. The method of claim 10, wherein a fTPM (firmware TPM) function resides in said at least one computing component electronically coupled with one or more of said plurality of hardware components or said software of said UAV for generating the authentication hash code, obtaining a unique identifier of at least one: (i) hardware component of said plurality of hardware components, or (ii) said software; and creating from said unique identifier a verification hash code for said at least one hardware component or software.

28. The method of claim 10, wherein encrypting said verification hash code comprises includes implementing a public key system or private key system.

29. The method of claim 18, wherein the public or private key system includes one or both of a time element or location element to further encrypt the hash code.

30. (amended) An unmanned aerial vehicle comprising:
a plurality of hardware components, including at least one processing component, at least one storage component, at least one rotor and an associated drive component connected to the rotor to drive the rotor;
said software being stored on said storage component;
a power supply;
a control mechanism for controlling the speed and direction of the UAV;
communications hardware for receiving and transmitting communications;
a system interfacing with said communications hardware of the UAV, said UAV software, and at least one of said plurality of hardware components;
wherein said UAV is configured to execute software that
generates an authentication hash code corresponding to said UAV;
obtains a unique identifier of at least one: (i) hardware component of said plurality of hardware components, or (ii) said software;
creates from said unique identifier a verification hash code for said at least one hardware component or software;
encrypts said verification hash code;
transmits said encrypted verification hash code via said communications hardware over a communications network to a remotely situated computing component; and
carries out a hardware and software integrity check during the flight of the UAV, and wherein when the integrity check fails verification during the flight of the UAV, operates the UAV to land the UAV at a designated location or to revert to manual control to control the UAV.

31. The vehicle of claim 30, wherein said UAV is configured to communicate via said communication hardware with a remote computing component which has access to said authentication hash code and which is configured to decrypt said encrypted verification hash code, to compare said verification hash code with said stored authentication hash code, and to verify the authenticity of the UAV when said verification hash code matches a stored authentication hash code of the UAV.

32. The vehicle of claim 31, wherein said vehicle, upon being verified, is configured to receive an operation code.

33. The vehicle of claim 31, wherein said UAV is configured to execute software comprising instructions provided as part of a TPM standards compliant chip/system.

34. The vehicle of claim 33, wherein a fTPM (firmware TPM) function resides in at least one of said plurality of hardware components, and wherein said fTPM includes instructions for:
generating an authentication hash code corresponding to said UAV;
obtaining a unique identifier of at least one: (i) hardware component of said plurality of hardware components, or (ii) said software;
creating from said unique identifier a verification hash code for said at least one hardware component or software; and
encrypting said verification hash code.

35. The vehicle of claim 34, wherein said fTPM includes instructions for:
transmitting said encrypted verification hash code via said communications hardware over a communications network to the remotely situated computing component.

## Patentansprüche

1. (abgeändert) Ein System, das sich in einem UAV befindet und das sowohl mit dem Kommunikationssystem des UAV als auch mit den Software- und Hardwareressourcen des UAV eine Schnittstelle bildet und das eine Firmware ausführen kann, das:
a. eine Seriennummer oder eine eindeutige Kennung der Hard- und Software der Drohne erhält und
b. eine Hash-Code-Kombination solcher eindeutiger Kennungen erstellt und
c. den Hash-Code weiter verschlüsselt, und
d. den verschlüsselten Hash-Code über ein verdrahtetes oder drahtloses Kommunikationssystem an einen anderen Computer überträgt, der eine Tabelle mit den zertifizierten Codes jedes UAV unterhält, was dazu führt, dass der Computer die Authentizität des spezifischen UAV verifiziert (oder nicht), und
e. wobei der Computer dann feststellt, ob die Hardware oder Software eines bestimmten UAV seit der letzten Zertifizierung des UAV verändert wurde
f. wobei das System eine Hardware- und Software-Integritätsprüfung während des Fluges des UAVs durchführt, und
g. wobei das System, wenn die Integritätsprüfung während des Fluges des UAV fehlschlägt, das UAV betreibt, um das UAV an einem bestimmten Ort zu landen oder um zur manuellen Steuerung des UAV zurückzukehren, um das UAV zu steuern.

2. System nach Anspruch 1, bei dem ein mit den TPM-Normen konformer Chip/System in der Drohne zur Überprüfung der Integrität der Drohnen-Hardware vorgesehen ist.

3. System nach Anspruch 1, wobei das UAV Software oder Firmware enthält, die ein fTPM-System umfasst.

4. System nach Anspruch 2, wobei die TPM-Chip-Verifikation auch zur Verschlüsselung der
Kommunikation zwischen dem UAV und einem zentralen Kommando- und Kontrollsystem verwendet wird.

5. System nach Anspruch 4, wobei das zentrale Befehls- und Kontrollsystem automatisiert ist.

6. System nach Anspruch 4, wobei das zentrale Befehls- und Kontrollsystem von einem Menschen bedient wird.

7. System nach Anspruch 3, bei dem sich eine fTPM-Funktion (Firmware-TPM) in einem vorhandenen Computer auf der Drohne befindet, um die in den Absätzen a. bis d. genannten Funktionen auszuführen.

8. System nach Anspruch 1, das ein öffentliches Schlüsselsystem oder ein privates Schlüsselsystem enthält, das so konfiguriert ist, dass es den in b. erzeugten Hash-Code weiter verschlüsselt.

9. System nach Anspruch 8, wobei das öffentliche oder private Schlüsselsystem ein Zeitelement oder ein Ortselement oder beides enthält, um den Hash-Code weiter zu verschlüsseln.

10. (geändert) Verfahren zur Sicherung des Betriebs eines unbemannten Luftfahrzeugs (UAV), einschließlich während des Fluges des UAV, wobei das UAV eine Vielzahl von Hardwarekomponenten und Software enthält, umfassend:
Erzeugen eines Authentifizierungs-Hash-Codes, der mindestens einem UAV entspricht, und Speichern des Authentifizierungs-Hash-Codes;
Bereitstellen mindestens einer Computerkomponente, die elektronisch mit einer oder mehreren der mehreren Hardwarekomponenten oder der Software des UAV gekoppelt ist;
Erhalten eines eindeutigen Identifikators von mindestens einer: (i) Hardwarekomponente der Vielzahl von Hardwarekomponenten oder (ii) der Software;
Erzeugen eines Verifikations-Hash-Codes für die mindestens eine Hardwarekomponente oder Software aus dem eindeutigen Identifikator;
Verschlüsseln des Verifikations-Hash-Codes;
Übertragen des verschlüsselten Verifikations-Hash-Codes über ein Kommunikationsnetz an eine entfernt gelegene Rechnerkomponente, Entschlüsseln des verschlüsselten Verifikations-Hash-Codes;
Vergleichen des Verifikations-Hash-Codes mit dem gespeicherten Authentifizierungs-Hash-Code;
Authentifizieren des UAV, wenn der Verifikations-Hash-Code mit dem gespeicherten Authentifizierungs-Hash-Code übereinstimmt;
wobei das Sichern des UAV-Betriebs das Ausführen einer Hardware- und Software-Integritätsprüfung während des Fluges des UAVs beinhaltet, und wobei, wenn die Integritätsprüfung während des Fluges des UAVs die Verifizierung fehlschlägt, das Betreiben des UAVs, um das UAV an einem bestimmten Ort zu landen oder um zur manuellen Steuerung zurückzukehren, um das UAV zu steuern.

11. Verfahren nach Anspruch 10, wobei der gespeicherte Authentifizierungs-Hash-Code in einer Datenbank gespeichert wird.

12. Verfahren nach Anspruch 11, einschließlich der Bereitstellung einer Datenbank mit einer gespeicherten Vielzahl von Authentifizierungs-Hash-Codes, wobei jeder der gespeicherten Vielzahl von Authentifizierungs-Hash-Codes einem bestimmten UAV entspricht.

13. Verfahren nach Anspruch 10, einschließlich der Bestimmung, ob die Hardware oder Software des UAVs geändert wurde.

14. Verfahren nach Anspruch 10, wobei das Zertifizieren des UAV das Erzeugen des Authentifizierungs-Hash-Codes, der dem UAV entspricht, und das Speichern des Authentifizierungs-Hash-Codes umfasst.

15. Verfahren nach Anspruch 14, wobei die entfernt angeordnete Rechnerkomponente eine Tabelle der zertifizierten Codes einer Vielzahl von UAVs unterhält, wobei die Rechnerkomponente mit Software konfiguriert ist, die Anweisungen enthält, um den Verifikations-Hash-Code zu erzeugen, den erzeugten Verifikations-Hash-Code mit den zertifizierten Codes in der Tabelle zu vergleichen und das UAV zu authentifizieren, wenn der UAV-Authentifikations-Hash-Code mit dem Verifikations-Hash-Code übereinstimmt.

16. Verfahren nach Anspruch 14, wobei die entfernt angeordnete Rechnerkomponente eine Tabelle der zertifizierten Codes einer Vielzahl von UAVs unterhält, wobei die Rechnerkomponente mit Software konfiguriert ist, die Anweisungen enthält, um den Verifizierungs-Hash-Code zu erzeugen, den erzeugten Verifizierungs-Hash-Code mit den zertifizierten Codes in der Tabelle zu vergleichen und zu bestimmen, ob eine der UAV-Hardwarekomponenten oder die UAV-Software seit der letzten Zertifizierung des UAVs geändert wurde.

17. Verfahren nach Anspruch 10, wobei der eindeutige Identifikator eine Seriennummer umfasst.

18. Verfahren nach Anspruch 10, wobei das Erhalten eines eindeutigen Identifikator für mindestens eine Hardwarekomponente der mehreren Hardwarekomponenten und für die Software erfolgt;
und wobei der Verifikations-Hash-Code aus einer Kombination des mindestens einen für die Hardware erhaltenen eindeutigen Hardware-Identifikator und des für die Software erhaltenen eindeutigen Identifikator erzeugt wird.

19. Verfahren nach Anspruch 18, wobei die entfernt angeordnete Rechnerkomponente eine Tabelle der zertifizierten Codes einer Vielzahl von UAVs unterhält, wobei die Rechnerkomponente mit Software konfiguriert ist, die Anweisungen enthält, um den Verifikations-Hash-Code zu erzeugen, den erzeugten Verifikations-Hash-Code mit den zertifizierten Codes in der Tabelle zu vergleichen und das UAV zu authentifizieren, wenn der UAV-Authentifizierungs-Hashcode mit dem Verifizierungs-Hashcode übereinstimmt.

20. Verfahren nach Anspruch 19, umfassend das Betreiben des UAVs, wenn das UAV durch den UAV-Verifizierungs-Hashcode authentifiziert worden ist.

21. Verfahren nach Anspruch 10, wobei die Übertragung des verschlüsselten Verifikations-Hash-Codes über ein drahtloses Kommunikationsnetz erfolgt.

22. Verfahren nach Anspruch 10, wobei die Übertragung des verschlüsselten Verifikations-Hash-Codes über ein drahtgebundenes Kommunikationsnetz erfolgt.

23. Verfahren nach Anspruch 10, wobei ein TPM-Standard-konformer Chip/System in der Drohne vorgesehen ist, um: den Authentifizierungs-Hash-Code zu erzeugen, eine eindeutige Kennung von mindestens einer: (i) Hardwarekomponente der mehreren Hardwarekomponenten oder (ii) der Software zu erhalten;
und aus der eindeutigen Kennung einen Verifizierungs-Hash-Code für die mindestens eine Hardwarekomponente oder Software zu erzeugen.

24. Verfahren nach Anspruch 23, wobei das UAV Software oder Firmware enthält, die ein fTPM-System umfasst.

25. Verfahren nach Anspruch 23, wobei der TPM-Standard-konforme Chip/das TPM-System die Kommunikation zwischen dem UAV und der entfernten Rechnerkomponente verschlüsselt.

26. Verfahren nach Anspruch 10, wobei die entfernte Rechnerkomponente ein zentrales Befehls- und Kontrollsystem umfasst.

27. Verfahren nach Anspruch 10, wobei sich eine fTPM-Funktion (Firmware-TPM) in der mindestens einen Computerkomponente befindet, die elektronisch mit einer oder mehreren der mehreren Hardwarekomponenten oder der Software des UAV gekoppelt ist, um den Authentifizierungs-Hash-Code zu erzeugen, eine eindeutige Kennung von mindestens einer: (i) Hardwarekomponente der mehreren Hardwarekomponenten oder (ii) der Software zu erhalten und aus der eindeutigen Kennung einen Verifizierungs-Hash-Code für die mindestens eine Hardwarekomponente oder Software zu erzeugen.

28. Verfahren nach Anspruch 10, wobei das Verschlüsseln des Verifikations-Hash-Codes die Implementierung eines öffentlichen Schlüsselsystems oder eines privaten Schlüsselsystems umfasst.

29. Verfahren nach Anspruch 18, wobei das öffentliche oder private Schlüsselsystem ein Zeitelement oder ein Ortselement oder beides enthält, um den Hashcode weiter zu verschlüsseln.

30. (geändert) Unbemanntes Luftfahrzeug, umfassend:
eine Vielzahl von Hardwarekomponenten, einschließlich mindestens einer Verarbeitungskomponente, mindestens einer Speicherkomponente, mindestens einem Rotor und einer zugehörigen Antriebskomponente, die mit dem Rotor verbunden ist, um den Rotor anzutreiben;
wobei die Software auf der Speicherkomponente gespeichert ist;
eine Energieversorgung;
einen Steuermechanismus zum Steuern der Geschwindigkeit und Richtung des UAV;
Kommunikationshardware zum Empfangen und Senden von Kommunikationen;
ein System, das eine Schnittstelle mit der Kommunikationshardware des UAV, der UAV-Software und mindestens einer der mehreren Hardwarekomponenten bildet;
wobei das UAV so konfiguriert ist, dass es Software ausführt, die einen dem UAV entsprechenden Authentifizierungs-Hash-Code erzeugt;
einen eindeutigen Identifikator von mindestens einer: (i) Hardwarekomponente der Vielzahl von Hardwarekomponenten oder (ii) der Software erhält;
aus dem eindeutigen Identifikator einen Verifikations-Hash-Code für die mindestens eine Hardwarekomponente oder Software erzeugt;
verschlüsselt den Verifikations-Hash-Code;
den verschlüsselten Verifizierungs-Hash-Code über die Kommunikationshardware über ein Kommunikationsnetzwerk an eine entfernt gelegene Rechnerkomponente überträgt;
und eine Hardware- und Software-Integritätsprüfung während des Fluges des UAVs durchführt, und wobei, wenn die Integritätsprüfung während des Fluges des UAVs die Verifizierung fehlschlägt, das UAV betreibt, um das UAV an einem bestimmten Ort zu landen oder um zur manuellen Steuerung zurückzukehren, um das UAV zu steuern.

31. Fahrzeug nach Anspruch 30, wobei das UAV so konfiguriert ist, dass es über die Kommunikationshardware mit einer entfernten Computerkomponente kommuniziert, die Zugriff auf den Authentifizierungs-Hashcode hat und die so konfiguriert ist, dass sie den verschlüsselten Verifizierungs-Hashcode entschlüsselt, den Verifizierungs-Hashcode mit dem gespeicherten Authentifizierungs-Hashcode vergleicht und die Authentizität des UAVs verifiziert, wenn der Verifizierungs-Hashcode mit einem gespeicherten Authentifizierungs-Hashcode des UAVs übereinstimmt.

32. Fahrzeug nach Anspruch 31, wobei das Fahrzeug, nachdem es verifiziert wurde, so konfiguriert ist, dass es einen Betriebscode empfängt.

33. Fahrzeug nach Anspruch 31, wobei das UAV so konfiguriert ist, dass es Software ausführt, die Befehle umfasst, die als Teil eines TPM-Standard-konformen Chips/Systems bereitgestellt werden.

34. Das Fahrzeug nach Anspruch 33, wobei eine fTPM-Funktion (TPM-Firmware) in mindestens einer dieser Hardwarekomponenten liegt, und wobei fTPM Anweisungen umfasst, um :
Erzeugen eines Authentifizierungs-Hashcodes, der dem genannten Vorgang entspricht;
Erhalten einer eindeutigen Kennung von mindestens einer:
(i) Hardwarekomponente aus der Vielzahl von Hardwarekomponenten, oder (ii) der Software ;
Erstellen eines Verifizierungs-Hashcodes für die mindestens eine Hardware- oder Softwarekomponente aus dieser eindeutigen Kennung; und
Verschlüsseln des Verifizierungs-Hashcodes.

35. Das Fahrzeug nach Anspruch 34, wobei das fTPM Anweisungen umfasst, um: den verschlüsselten Verifizierungs-Hash-Code über die Kommunikationshardware über ein Kommunikationsnetz an die entfernt gelegene Computerkomponente zu übertragen

## Revendications

1. (modifié) Un système qui réside dans un drone et qui s'interface à la fois avec le système de communication du drone et avec les ressources logicielles et matérielles du drone, et qui peut exécuter un micrologiciel qui : a. obtient un numéro de série ou un identificateur unique du matériel et des logiciels sur le drone, et qui peut exécuter un micrologiciel sur le drone :
a. obtient un numéro de série ou un identifiant unique du matériel et des logiciels du drone, et
b. crée une combinaison de codes de hachage de ces identifiants uniques, et
c. crypte le code de hachage, et
d. transmet le code de hachage crypté via un système de communication câblé ou sans fil à un autre ordinateur qui tient une table des codes certifiés de chaque drone, ce qui permet à cet ordinateur de vérifier l'authenticité du drone en question (ou non), et
e. l'ordinateur détermine alors si le matériel ou le logiciel d'un drone spécifique a été modifié depuis la dernière certification du drone ;
f. dans lequel le système effectue un contrôle d'intégrité du matériel et du logiciel pendant le vol de l'UAV, et
g. dans lequel, lorsque le contrôle d'intégrité échoue pendant le vol du drone, le système fait atterrir le drone à un endroit désigné ou revient à une commande manuelle pour contrôler le drone.

2. Le système de la revendication 1, dans lequel une puce/un système conforme aux normes TPM est fourni dans le drone pour la vérification de l'intégrité du matériel du drone.

3. Le système de la revendication 1, dans lequel le drone comprend un logiciel ou un micrologiciel comprenant un système fTPM.

4. Le système de la revendication 2, dans lequel la vérification de la puce TPM est également utilisée pour crypter les communications entre le drone et le système central de commande et de contrôle.
les communications entre le drone et un système central de commande et de contrôle.

5. Le système de la revendication 4, dans lequel ledit système central de commande et de contrôle est automatisé.

6. Le système de la revendication 4, dans lequel ledit système central de commande et de contrôle est exploité par un humain.

7. Le système de la revendication 3, dans lequel une fonction fTPM (firmware TPM) réside dans un ordinateur existant sur le drone pour exécuter les fonctions énoncées aux paragraphes a. à d.

8. Le système de la revendication 1, comprenant un système à clé publique ou un système à clé privée configuré pour crypter davantage le code de hachage créé en b.

9. Le système de la revendication 8, dans lequel le système à clé publique ou privée comprend un élément temporel ou un élément de localisation, ou les deux, pour crypter davantage le code de hachage.

10. (modifié) Méthode pour sécuriser le fonctionnement d'un véhicule aérien sans pilote (UAV), y compris pendant le vol de l'UAV, lorsque ledit UAV comprend une pluralité de composants matériels et logiciels, comprenant :
Générer un code de hachage d'authentification correspondant à au moins un UAV, et stocker ce code de hachage d'authentification ;
Fournir au moins un composant informatique couplé électroniquement à un ou plusieurs de ces composants matériels ou logiciels du drone ;
Obtenir un identifiant unique d'au moins un : (i) composant matériel de ladite pluralité de composants matériels, ou (ii) dudit logiciel
Créer, à partir de cet identifiant unique, un code de hachage de vérification pour ledit au moins un composant matériel ou logiciel ;
chiffrer ledit code de hachage de vérification ;
transmettre ledit code de hachage de vérification crypté sur un réseau de communication à un composant informatique situé à distance, décryptage dudit code de hachage de vérification crypté ;
comparer ledit code de hachage de vérification avec ledit code de hachage d'authentification stocké ; authentifier l'UAV lorsque ledit code de hachage de vérification correspond audit code de hachage d'authentification stocké code de hachage d'authentification stocké ;
dans lequel ladite sécurisation du fonctionnement du drone comprend l'exécution d'un contrôle d'intégrité du matériel et du logiciel pendant le vol du drone, et dans lequel, lorsque le contrôle d'intégrité échoue pendant le vol du drone, l'utilisation du drone pour le faire atterrir à un endroit désigné ou pour revenir à une commande manuelle afin de contrôler le drone.

11. Méthode de la revendication 10, dans laquelle le code de hachage d'authentification stocké est stocké dans une base de données.

12. La méthode de la revendication 11, comprenant la fourniture d'une base de données contenant une pluralité de codes de hachage d'authentification stockés, dans laquelle chacun de cette pluralité de codes de hachage d'authentification stockés correspond à un drone spécifique.

13. La méthode de la revendication 10 consiste à déterminer si le matériel ou le logiciel de l'UAV a été modifié.

14. Procédé de la revendication 10, dans lequel la certification dudit drone consiste à générer ledit code de hachage d'authentification correspondant audit drone, et à stocker ledit code de hachage d'authentification.

15. Méthode de la revendication 14, dans laquelle ledit composant informatique situé à distance maintient une table des codes certifiés d'une pluralité de drones, dans laquelle ledit composant informatique est configuré avec un logiciel contenant des instructions pour générer ledit code de hachage de vérification, comparer ledit code de hachage de vérification généré avec les codes certifiés dans ladite table, et authentifier ledit drone lorsque ledit code de hachage d'authentification du drone correspond audit code de hachage de vérification.

16. Méthode de la revendication 14, dans laquelle le composant informatique situé à distance maintient une table des codes certifiés d'une pluralité de drones, dans laquelle ledit composant informatique est configuré avec un logiciel contenant des instructions pour générer ledit code de hachage de vérification, comparer ledit code de hachage de vérification généré avec les codes certifiés dans ladite table, et déterminer si l'un des composants matériels du drone ou le logiciel du drone a été modifié depuis que le drone a été certifié pour la dernière fois.

17. Méthode de la revendication 10, dans laquelle l'identifiant unique comprend un numéro de série.

18. La méthode de la revendication 10, dans laquelle l'obtention d'un identifiant unique se fait pour au moins un composant matériel de ladite pluralité de composants matériels, et pour ledit logiciel ; et dans laquelle ledit code de hachage de vérification est créé à partir d'une combinaison dudit au moins un identifiant unique matériel obtenu pour ledit matériel, et dudit identifiant unique obtenu pour ledit logiciel.

19. Méthode de la revendication 18, dans laquelle ledit composant informatique situé à distance maintient une table des codes certifiés d'une pluralité de drones, dans laquelle ledit composant informatique est configuré avec un logiciel contenant des instructions pour générer ledit code de hachage de vérification, comparer ledit code de hachage de vérification généré avec les codes certifiés dans ladite table, et authentifier ledit drone lorsque ledit code de hachage d'authentification du drone correspond audit code de hachage de vérification.

20. La méthode de la revendication 19, comprenant le fonctionnement dudit drone lorsque ledit drone a été authentifié par ledit code de hachage de vérification du drone.

21. Méthode de la revendication 10, dans laquelle la transmission dudit code de hachage de vérification crypté s'effectue sur un réseau de communication sans fil.

22. Méthode de la revendication 10, dans laquelle la transmission dudit code de vérification crypté se fait sur un réseau de communication câblé.

23. Méthode de la revendication 10, dans laquelle une puce/un système conforme aux normes TPM est fourni dans le drone pour : générer le code de hachage d'authentification, obtenir un identifiant unique d'au moins un : (i) composant matériel de ladite pluralité de composants matériels, ou (ii) dudit logiciel ; et créer à partir de cet identifiant unique un code de hachage de vérification pour ledit au moins un composant matériel ou logiciel.

24. La méthode de la revendication 23, dans laquelle le drone comprend un logiciel ou un micrologiciel comprenant un système fTPM.

25. Méthode de la revendication 23, dans laquelle la puce/le système conforme aux normes TPM crypte les communications entre le drone et le composant informatique situé à distance.

26. Méthode de la revendication 10, dans laquelle ledit composant informatique situé à distance comprend un système central de commande et de contrôle.

27. La méthode de la revendication 10, dans laquelle une fonction fTPM (firmware TPM) réside dans ledit au moins un composant informatique couplé électroniquement à un ou plusieurs desdits composants matériels ou dudit logiciel dudit drone pour générer le code de hachage d'authentification, obtenir un identifiant unique d'au moins un : (i) composant matériel de ladite pluralité de composants matériels, ou (ii) dudit logiciel ; et créer à partir de cet identifiant unique un code de hachage de vérification pour ledit au moins un composant matériel ou logiciel.

28. Méthode de la revendication 10, dans laquelle le cryptage dudit code de hachage de vérification comprend la mise en oeuvre d'un système à clé publique ou d'un système à clé privée.

29. Méthode de la revendication 18, dans laquelle le système à clé publique ou privée comprend un élément temporel ou un élément de localisation, ou les deux, pour crypter davantage le code de hachage.

30. (modifié) Véhicule aérien sans pilote comprenant :
une pluralité de composants matériels, y compris au moins un composant de traitement, au moins un composant de stockage, au moins un rotor et un composant d'entraînement associé connecté au rotor pour entraîner le rotor ;
ledit logiciel étant stocké sur ledit composant de stockage ; une alimentation électrique ;
un mécanisme de commande pour contrôler la vitesse et la direction du drone ; un matériel de communication pour recevoir et transmettre des communications ;
un système en interface avec ledit matériel de communication du drone, ledit logiciel du drone et au moins l'un de ces composants matériels ;
dans lequel ledit drone est configuré pour exécuter un logiciel qui génère un code de hachage d'authentification correspondant audit drone ;
obtient un identifiant unique d'au moins un : (i) composant matériel de ladite pluralité de composants matériels, ou (ii) dudit logiciel ;
crée, à partir de cet identificateur unique, un code de hachage de vérification pour ledit au moins un composant matériel ou logiciel ;
crypte ledit code de hachage de vérification ;
transmet ledit code de hachage de vérification crypté via ledit matériel de communication sur un réseau de communication à un composant informatique situé à distance ; et
effectue un contrôle d'intégrité du matériel et du logiciel pendant le vol du drone et, lorsque le contrôle d'intégrité échoue pendant le vol du drone, commande le drone pour le faire atterrir à un endroit désigné ou pour revenir à une commande manuelle afin de contrôler le drone.

31. Le véhicule de la revendication 30, dans lequel ledit drone est configuré pour communiquer via ledit matériel de communication avec un composant informatique distant qui a accès audit code de hachage d'authentification et qui est configuré pour décrypter ledit code de hachage de vérification crypté, pour comparer ledit code de hachage de vérification avec ledit code de hachage d'authentification stocké, et pour vérifier l'authenticité du drone lorsque ledit code de hachage de vérification correspond à un code de hachage d'authentification stocké du drone.

32. Le véhicule de la revendication 31, dans lequel ledit véhicule, après avoir été vérifié, est configuré pour recevoir un code d'opération.

33. Véhicule selon la revendication 31, dans lequel le drone est configuré pour exécuter un logiciel comprenant des instructions fournies dans le cadre d'une puce ou d'un système conforme aux normes fTPM.

34. Le véhicule de la revendication 33, dans lequel une fonction fTPM (firmware TPM) réside dans au moins un de ces composants matériels, et dans lequel fTPM comprend des instructions pour :
générer un code de hachage d'authentification correspondant audit drone ;
obtenir un identifiant unique d'au moins un : (i) composant matériel de ladite pluralité de composants matériels, ou (ii) dudit logiciel ;
créer, à partir de cet identifiant unique, un code de hachage de vérification pour ledit au moins un composant matériel ou logiciel ; et
chiffrer ledit code de hachage de vérification.

35. Le véhicule de la revendication 34, dans lequel le fTPM comprend des instructions pour : transmettre ledit code de hachage de vérification crypté via ledit matériel de communication
sur un réseau de communication au composant informatique situé à distance
